# EUROPÄISCHE PATENTSCHRIFT

(11) **EP 0 526 748 B1**
(45) Veröffentlichungstag und Bekanntmachung des Hinweises auf die Patenterteilung: **29.11.1995**
(21) Anmeldenummer: 92111570.5
(22) Anmeldetag: 08.07.1992
(51) Int. Cl.: F16K 1/226

(54) **Absperrarmatur**
Valve
Vanne

(30) Priorität: 08.07.1991 DE 4122605
(43) Veröffentlichungstag der Anmeldung: 10.02.1993
(73) Patentinhaber: zur Steege geb. Hinze, Ellen, D-40883 Ratingen (DE)
(72) Erfinder: zur Steege, Wolf, W-4030 Ratingen 6 (DE)
(74) Vertreter: Zenz, Joachim Klaus, Dipl.-Ing.

(56) Entgegenhaltungen:
- EP-A- 0 328 914
- CH-A- 616 496
- DE-A- 1 600 964
- DE-A- 2 654 324
- DE-A- 3 815 404
- DE-U- 8 805 522

## Beschreibung

Die Erfindung betrifft eine Absperrarmatur mit einem Rahmen, der eine Durchlaßöffnung definiert, einer Klappe, die in eine die Durchlaßöffnung sperrende Schließstellung bewegbar ist, und mit mindestens einer die Durchlaßöffnung begrenzenden Dichtleiste, die einen im Querschnitt im wesentlichen U- oder V-förmig gebogenen Federstahlstreifen aufweist, dessen Schenkel mit ihren freien Enden am Rahmen befestigt sind, wobei mindestens der mit der Klappe zusammenwirkende Schenkel im wesentlichen in Schließrichtung der Klappe verläuft und so angeordnet ist, daß die Klappe mit ihrem Rand am Ende ihrer Schließbewegung vom Biegebereich des Federstrahlstreifens aus auf diesen Schenkel aufgleitet.

Am Ende ihrer Schließbewegung gleitet die Klappe mit ihrem Rand auf den zugehörigen Schenkel des Federstahl-Streifens auf und stellt unter leichtgängiger Verformung des Streifens die Dichtwirkung her. Die Abdichtung ist nicht an einen kritischen Punkt gebunden. Ferner bewirkt das Aufgleiten des Klappenrandes, daß die Dichtfläche des Federstahl-Streifens von etwaigen Ablagerungen gesäubert wird.

Die Maßverhältnisse werden so gewählt, daß der Klappenrand am Ende der Schließbewegung mit dem Übergang zwischen dem Biegungsbereich des Federstahl-Streifens und dessen rahmenfernem Schenkel in Berührung tritt. Dabei ist darauf zu achten, daß der Punkt der ersten Berührung in ausreichendem Abstand vom Scheitelpunkt des Biegungsbereichs des Federstahl-Streifens liegt, da sonst die Gefahr eines Aufwölbens des Federstahl-Streifens besteht.

Zu derartigen Verhältnissen kann es kommen, wenn die Absperrarmatur aufgeheizt wird. Dabei dehnt sich die Klappe stärker als der Rahmen, mit dem Ergebnis, daß sich der Berührungspunkt zum Scheitelpunkt des Biegungsbereichs des Federstahl-Streifens verschiebt.

Der Erfindung liegt die Aufgabe zugrunde, hier Abhilfe zu schaffen und die Absperrarmatur so auszubilden, daß Abhebungen und unzulässige Verformungen der Dichtleiste unterbunden werden.

Zur Lösung dieser Aufgabe ist die Absperrarmatur nach der Erfindung gekennzeichnet durch eine Versteifungseinrichtung zum Halten des dem Rahmen zugewandten Schenkels des Federstahl-Streifens.
Aus der DE-A-2 654 324 ist eine Absperrarmatur mit einem im wesentlichen U-förmigen Federstahlstreifen bekannt, der mit seinem Biegungsbereich in den Bewegungsweg des als Schieberplatte ausgebildeten Absperrelementes hineinragt. Im Federstahlstreifen ist eine Versteifungseinrichtung angeordent, die den Biegungsbereich in der Schließstellung zusätzlich gegen die Schieberplatte verspannt. Dadurch wird die Anpresskraft erhöht und bei hohen Temperaturen die nachlassende Federkraft des Federstahlstreifens kompensiert.

Erfindungsgemäß hingegen bildet die Versteifungseinrichtung eine Halterung für den rahmenseitigen Schenkel des Federstahl-Streifens und hindert dessen Biegungsbereich auf diese Weise daran, sich vom Rahmen abzuheben und dadurch die unerwünschte Verformung zu bewirken.

Die erfindungsgemäße Anordnung bringt einen wesentlichen zusätzlichen Vorteil mit sich. Sie hält nämlich den Federstahl-Streifen auch dann in der korrekten Lage fest, wenn die Dichtleiste hohen Strömungsgeschwindigkeiten ausgesetzt wird. Der dabei entstehende Unterdruck ist sonst in der Lage, den Federstahl-Streifen vom Rahmen abzuheben, wodurch ein korrektes Aufgleiten des Klappenrandes zumindest stark behindert wird.

Die Versteifungseinrichtung kann ohne weiteres von außen in den Federstahl-Streifen hineingreifen, wobei eine Verbindung zwischen dem rahmenseitigen Schenkel des Streifens und der benachbarten Rahmenwandung hergestellt wird.

Vorzugsweise hingegen erstreckt sich die Versteifungseinrichtung im Inneren des Federstahl-Streifens von dessen Befestigungsstelle bis in dessen Biegungsbereich hinein.

Die Versteifungseinrichtung hält also praktisch die rahmenseitige Hälfte des Federstahl-Streifens fest, so daß letzterer sich nicht vom Rahmen lösen kann und unter der Einwirkung des Klappenrandes keinen unzulässigen Verformungen unterworfen wird.

Wenn sich die Versteifungseinrichtung im Inneren des Federstahl-Streifens befindet, ist ein Lochen des Streifens nicht erforderlich, so daß auch hohe Gasgeschwindigkeiten zugelassen werden können.

In Weiterbildung der Erfindung weist die Versteifungseinrichtung eine dem Biegungsbereich des Federstahl-Streifens entsprechende Form auf. Dadurch wird der Streifen optimal unterstützt, ohne daß eine Beeinträchtigung der Dichtwirkung eintritt.

Eine besonders vorteilhafte Formgebung besteht darin, daß die Versteifungseinrichtung ein im Biegungsbereich des Federstahl-Streifens angeordnetes Rohr oder gerundetes Profil aufweist, das eine Berührung des Streifens mit scharfen Kanten der Versteifungseinrichtung verhindert. Alternativ oder zusätzlich dazu kann die Versteifungseinrichtung mindestens ein sich in Längsrichtung des Federstahl-Streifens erstreckendes Blech aufweisen. Dabei ist es dann besonders vorteilhaft, das Blech zwischen dem rahmenseitigen Schenkel des Federstahl-Streifens und einer zu dessen Befestigung vorgesehenen Abstandsleiste einzuspannen. Mit Abstandsleiste wird man dann arbeiten, wenn der Federstahl-Steifen im wesentlichen U-förmig gebogen ist. Diese Formgebung hat sich in der Praxis besonders bewährt.

Ein weiteres bevorzugtes Merkmal besteht darin, eine Mehrzahl von an der Abstandsleiste befestigten Stegen vorzusehen, die senkrecht zu dem rahmenseitigen Schenkel des Federstahl-Streifens angeordnet sind. Die Stege können den rahmenseitigen Schenkel direkt abstützen. Sie können aber auch mit dem eingelegten Blech und/oder dem eingelegten Rohr in Verbindung stehen.

Dabei ist es besonders vorteilhaft, daß die Stege das Rohr oder das gerundete Profil mit Abstand übergreifen. Sie bilden also eine Absicherung, die das Aufwärtswandern des Rohres bzw. des gerundeten Profils verhindern, ohne daß thermische Dehnspannungen auftreten.

Als erfindungswesentlich offenbart gelten auch solche Kombinationen der erfindungsgemäßen Merkmale, die von den vorstehend diskutierten Verknüpfungen abweichen.

Die Erfindung wird im folgenden anhand bevorzugter Ausführungsbeispiele im Zusammenhang mit der beiliegenden Zeichnung näher erläutert. Die Zeichnung zeigt in:
Fig. 1 einen schematischen Schnitt durch eine Absperrarmatur mit unzulässig verformter Dichtleiste;
Fig. 2 einen schematischen Schnitt durch eine Absperrarmatur nach einer ersten erfindungsgemäßen Ausführungsform;
Fig. 3 einen schematischen Schnitt durch eine Absperrarmatur nach einer zweiten erfindungsgemäßen Ausführungsform;
Fig. 4 einen schematischen Schnitt durch eine Absperrarmatur nach einer dritten erfindungsgemäßen Ausführungsform;
Fig. 5 einen schematischen Schnitt durch eine Absperrarmatur nach einer vierten erfindungsgemäßen Ausführungsform.

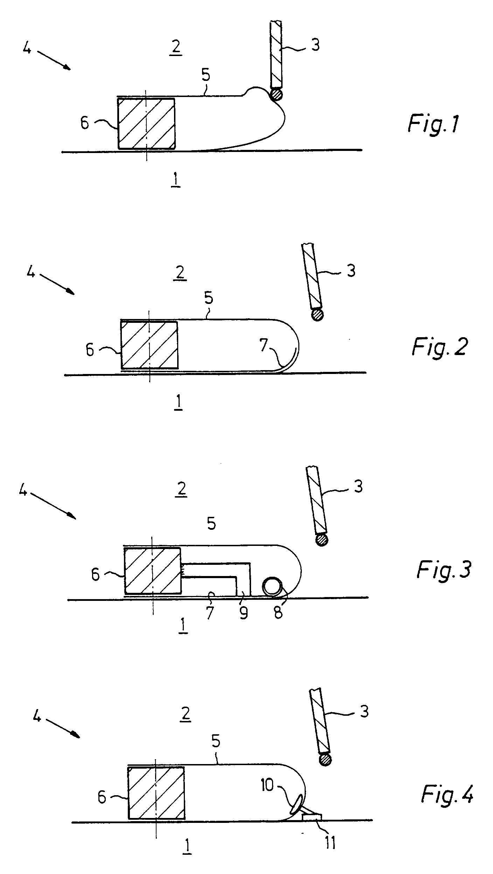

Nach Figur 1 umfaßt die Absperrarmatur einen Rahmen 1, der eine Durchlaßöffnung 2 definiert. Die Durchlaßöffnung 2 ist durch eine Klappe 3 verschließbar, und zwar im Zusammenwirken mit einer Dichtleiste 4. Letztere weist einen U-förmig gebogenen Federstahl-Streifen 5 auf, der mittels einer Abstandsleiste 6 am Rahmen 1 befestigt ist.

Gemäß Figur 1 hat sich die Klappe 3 thermisch so stark gedehnt, daß ihr Rand nicht mehr auf den oberen Schenkel des Federstahl-Streifens 5 aufgleiten kann, sondern zu nahe am Scheitelpunkt des Biegebereichs mit dem Streifen in Berührung tritt. Es kommt daher zu der dargestellten Abhebung und Verformung, bei der der Federstahl-Streifen 5 seine vorgesehene Funktion nicht mehr korrekt ausüben kann. Ähnliche Verhältnisse ergeben sich, wenn die Strömungsgeschwindigkeiten in der Durchlaßöffnung 2 so groß sind, daß der Unterdruck den Streifen 5 vom Rahmen 1 abhebt.

Derartigen Verformungen können bei der Absperrarmatur nach Figur 2 nicht auftreten. Hier ist im Inneren des Federstahl-Streifens 5 eine Verstärkungseinrichtung in Form eines Bleches 7 vorgesehen. Das Blech 7 wird von der Abstandsleiste 6 gemeinsam mit dem Streifen 5 gegen den Rahmen 1 verspannt. Im vorderen Bereich ist das Blech 7 gebogen, und zwar in Anpassung an die Form des Biegebereichs des Federstahl-Streifens 5. Das Blech 7 hält den Streifen 5 fest und verhindert eine unzulässige Abhebung und Verformung im Biegebereich. Die Klappe 3 kann also auch dann noch korrekt auf den oberen Schenkel des Streifens 5 aufgleiten, wenn sie einer starken thermischen Dehnung ausgesetzt ist. Außerdem behält der Federstahl-Streifen 5 seine Form auch im Falle eines erheblichen Unterdrucks.

Die Ausführungsform nach Figur 3 unterscheidet sich von der nach Figur 2 durch eine andere Gestaltung der Versteifungseinrichtung. Hier ist das Blech 7 im Biegungsbereich des Federstahl-Streifens 5 mit einem Rohr 8 verbunden, welches sich in Längsrichtung der Dichtleiste 4 erstreckt. Ferner sind an der Abstandsleiste 6 Stege 9 befestigt, die eine zusätzliche Stütze für das Blech 7 bilden.

Bei der Ausführungsform nach Figur 4 greift die Versteifungseinrichtung von außen in den Federstahl-Streifen 5 hinein. In den Streifen ist ein gerundetes Profil 10 eingelegt, welches mit einem Verankerungspunkt 11 des Rahmens 1 in Verbindung steht. Der Streifen muß hierzu gelocht werden. Auch diese Konstruktion verhindert zuverlässig ein unerwünschtes Abheben des Federstahl-Streifens 5.

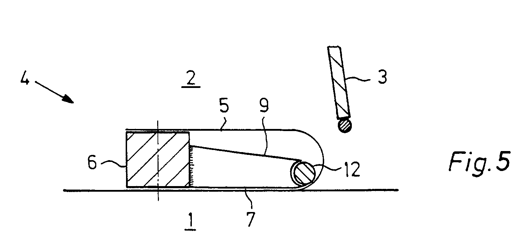

Bei der Ausführungsform nach Figur 5 ist das Blech 7 mit einem Rundprofil 12 verbunden. Die Stege, die an der Abstandsleiste 6 angeschweißt sind, erstrecken sich nach unten bis zu dem Blech 7. Ferner übergreifen sie mit Abstand das Rundprofil 12.

Im Rahmen der Erfindung sind durchaus Abwandlungsmöglichkeiten gegeben. So können die Stege direkt mit dem Rohr oder Profil verbunden sein. Unter Umständen reichen auch die Stege 9 als alleinige Versteifungseinrichtung aus. Sie stützen dann den rahmenseitigen Schenkel des Federstahl-Streifens 5 direkt ab.

## Patentansprüche

1. Absperrarmatur mit einem Rahmen (1), der eine Durchlaßöffnung (2) definiert, einer Klappe (3), die in eine die Durchlaßöffnung sperrende Schließstellung bewegbar ist, und mit mindestens einer die Durchlaßöffnung begrenzenden Dichtleiste (4), die einen im Querschnitt im wesentlichen U- oder V-förmig gebogenen Federstahlstreifen (5) aufweist, dessen Schenkel mit ihren freien Enden am Rahmen befestigt sind, wobei mindestens der mit der Klappe zusammenwirkende Schenkel im wesentlichen in Schließrichtung der Klappe verläuft und so angeordnet ist, daß die Klappe (3) mit ihrem Rand am Ende ihrer Schließbewegung vom Biegebereich des Federstahlstreifens (5) aus auf diesen Schenkel aufgleitet, wobei eine Versteifungseinrichtung zum Halten des dem Rahmen (1) zugewandten Schenkels des Federstahlstreifens (5) vorgesehen ist.

2. Absperrarmatur nach Anspruch 1, dadurch gekennzeichnet, daß sich die Versteifungseinrichtung im Inneren des Federstahl-Streifens von dessen Befestigungsstelle bis in dessen Biegungsbereich hinein erstreckt.

3. Absperrarmatur nach Anspruch 1 oder 2, dadurch gekennzeichnet, daß die Versteifungseinrichtung eine dem Biegungsbereich des Federstahl-Streifens (5) entsprechende Form aufweist.

4. Absperrarmatur nach Anspruch 3, dadurch gekennzeichnet, daß die Versteifungseinrichtung ein im Biegungsbereich des Federstahl-Streifens (5) angeordnetes Rohr (8) oder gerundetes Profil aufweist.

5. Absperrarmatur nach Anspruch 3 oder 4, dadurch gekennzeichnet, die Versteifungseinrichtung mindestens ein sich in Längsrichtung des Federstahl-Streifens (5) erstreckendes Blech (7) aufweist.

6. Absperrarmatur nach Anspruch 5, dadurch gekennzeichnet, daß das Blech (7) zwischen dem rahmenseitigen Schenkel des Federstahl-Streifens (5) und einer zu dessen Befestigung vorgesehenen Abstandsleiste (6) eingespannt ist.

7. Absperrarmatur nach Anspruch 6, gekennzeichnet durch eine Mehrzahl von an der Abstandsleiste (6) befestigten Stegen (9), die senkrecht zu dem rahmenseitigen Schenkel des Federstahl-Streifens (5) angeordnet sind.

8. Absperrarmatur nach Anspruch 7, dadurch gekennzeichnet, daß die Stege (9) das Rohr (8) oder das gerundete Profil mit Abstand übergreifen.

## Claims

1. Shut off valve with a frame (1), which defines an opening (2), a flap (3), which is movable into a closed position in which it blocks the opening, and with at least one sealing strip (4), which bounds the opening and which has a bent spring steel strip (5) of substantially U or V shaped cross-section, the free ends of the limbs of which are secured to the frame, whereby at least the limb cooperating with the flap extends substantially in the closing direction of the flap and is so arranged that the edge of the flap slides at the end of its closing movement from the bent region of the spring steel strip (5) on this limb, whereby a stiffening device is provided for holding the limb of the spring steel strip (5) directed towards the frame (1).

2. Shut off valve as claimed in claim 1, characterised in that the stiffening device extends in the interior of the spring steel strip from its fastening point into its bent region.

3. Shut off valve as claimed in claim 1 or 2, characterised in that the stiffening device has a shape corresponding to the bent region of the spring steel strip (5).

4. Shut off valve as claimed in claim 3, characterised in that the stiffening device has a tube (8) or rounded profile arranged in the bent region of the spring steel strip (5).

5. Shut off valve as claimed in claim 3 or 4, characterised in that the stiffening device has at least one sheet metal plate (7) extending in the longitudinal direction of the spring steel strip (5).

6. Shut off valve as claimed in claim 5, charaterised in that the sheet metal plate (7) is clamped between the limb of the spring steel strip (5) on the frame side and a spacer bar (6) provided to secure it.

7. Shut off valve as claimed in claim 6, characterised by a plurality of webs (9) which are secured to the spacer bar (6) and which are arranged perpendicular to the limb of the spring steel strip (5) on the frame side.

8. Shut off valve as claimed in claim 7, characterised in that the webs (9) engage over the tube (8) or the rounded profile and are spaced therefrom.

## Revendications

1. Armature d'arrêt avec un cadre (1), définissant une ouverture de passage (2), un volet (3), amenable dans une position de fermeture obstruant l'ouverture de passage, et avec au moins une bande d'étanchéité (4), délimitant l'ouverture de passage et qui présente une bande en acier à ressort (5) coudée, à section transversale sensiblement en U ou en V, dont les branches sont fixées par leurs extrémités libres sur le cadre, au moins la branche coopérant avec le volet s'étendant sensiblement dans la direction de fermeture du volet et étant disposée de manière que le volet (3) glisse, par son bord, sur cette branche, à la fin de son déplacement de fermeture, hors de la zone de flexion de la bande en acier à ressort (5), un dispositif de rigidification étant prévu pour maintenir la branche de la bande en acier à ressort (5) tournée vers le cadre (1).

2. Armature d'arrêt selon la revendication 1, caractérisée en ce que le dispositif de rigidification s'étend, à l'intérieur de la bande en acier à ressort, de son point de fixation jusque dans sa zone de flexion.

3. Armature d'arrêt selon la revendication 1 ou 2, caractérisée en ce que le dispositif de rigidification présente une forme correspondant à la zone de flexion de la bande en acier à ressort (5).

4. Armature d'arrêt selon la revendication 3, caractérisée en ce que le dispositif de rigidification présente un tube (8), ou un profilé arrondi, disposé dans la zone de flexion de la bande en acier à ressort (5).

5. Armature d'arrêt selon la revendication 3 ou 4, caractérisée en ce que le dispositif de rigidification présente au moins une tôle (7) s'étendant dans la direction longitudinale de la bande en acier à ressort (5).

6. Armature d'arrêt selon la revendication 5, caractérisée en ce que la tôle (7) est enserrée entre la branche située côté cadre de la bande en acier à ressort (5) et une bande d'espacement (6) prévue pour sa fixation.

7. Armature d'arrêt selon la revendication 6, caractérisée par une pluralité de nervures (9), fixées à la bande d'espacement (6) et disposées perpendiculairement par rapport à la branche située côté cadre de la bande en acier à ressort (5).

8. Armature d'arrêt selon la revendication 7, caractérisée en ce que les nervures (9) saisissent par le dessus et à distance le tube (8), ou le profilé arrondi.
